# EUROPEAN PATENT SPECIFICATION

(11) **EP 2 059 420 B1**
(45) Date of publication and mention of the grant of the patent: **27.04.2011**
(21) Application number: 06799678.5
(22) Date of filing: 04.09.2006
(51) Int. Cl.: B60R 21/233, B60R 21/231

(54) **AN AlRBAG**
AIRBAG
COUSSIN DE SECURITE GONFLABLE

(43) Date of publication of application: 20.05.2009
(73) Proprietor: Autoliv Development AB, 447 83 Vårgårda (SE)
(72) Inventor: DUBOIS, Alexis, 60850 Cuigy en Bray (FR); VANZIELEGHEM, Samuel, 76750 Bosc Edeline (FR)
(74) Representative: Beattie, Alex Thomas Stewart
(86) International application number: PCT/SE2006/001006
(87) International publication number: WO 2008/030144

(56) References cited:
- WO-A1-03/101788
- WO-A1-2006/041345
- WO-A1-2006/089144
- GB-A- 2 417 465
- US-A1- 2004 174 003

## Description

This invention relates to an airbag for use in a motor vehicle, in particular a frontal impact airbag such as, for example, a "driver air bag" (DAB).

When a motor vehicle is involved in a crash situation involving a frontal impact, there is a very grave risk of injury to a driver or front passenger of the vehicle from consequent impact of either the head or thorax region against the steering wheel, dashboard and perhaps even the engine of the motor vehicle.

So-called "front-impact" airbags are designed to reduce the risk of injury due to such impact, particularly with the dashboard and/or steering wheel of the vehicle, and it is known to provide front-impact airbags which, when deployed, engage not only with the head of the occupant, but at the same time engage with the thorax region of the vehicle occupant in an effort to reduce severe injury to both head and thorax.

Such an airbag is known from WO2006/041345.

It has now been found that one problem associated with such airbags is that as they engage with the head and thorax region of the vehicle occupant, the airbag tends to exert the same force on the head and thorax. Due to the typical discrepancy in mass between the head and thorax region of the occupant, the head and thorax tend therefore to be decelerated at differential rates, which may exert undesirable strain on the neck region of the vehicle occupant. The problem can be even more serious in applications where rapid coupling of the airbag with the vehicle occupant occurs, for example in a "pre-crash" airbag system where the airbag is deployed very quickly, prior to actual impact, in response to the detection of an imminent collision. In such cases, the very rapid deployment of the airbag increases the force exerted on the vehicle occupant by the airbag, which in turn may increase the differential deceleration on the head and thorax.

It is an object of the present invention to seek to provide an improved airbag.

According to one aspect of the present invention there is provided an airbag, the airbag comprising an inflatable cushion for connection to an inflator, a secondary inflatable region in fluid communication with the inflatable cushion and a pair of separate inflatable cells in fluid communication with the secondary inflatable region, the airbag being configured such that, when the airbag is inflated during deployment, the secondary inflatable region extends forwardly from the inflatable cushion for initially engaging the thorax of a vehicle passenger whilst the head of the passenger is spaced forwardly of the inflatable cushion, the inflatable cells extending upwardly from the secondary region upon inflation and being spaced forwardly of the inflatable cushion for initial engagement with the head of the passenger during said deployment, the inflatable cells further being joined to one another along a fold line whereby, upon striking of the inflatable cells by the head of the passenger, the inflatable cells tend to fold towards one another, along the fold line, whilst moving towards the inflatable cushion.

Preferably, the secondary inflatable region is defined by a pair of separate inflatable arms which, when the airbag is inflated, extend forwardly from the inflatable cushion, the ends of the arms remote from the inflatable cushion being secured to one another and each supporting a respective one of the inflatable cells.

Preferably the air-bag is formed from two superimposed layers of fabric material.

Optionally, the lower edge of the inflatable cushion incorporates a cut out section.

Advantageously, the air-bag is formed from two superimposed layers of fabric of substantially identical shape, each layer of fabric comprising a central region, two arm regions extending outwardly on opposite sides of the central region and a respective pair of upwardly directed toe regions at the opposuite ends of the arm regions, the two layers being secured to one another around their periphery, wherein the opposing central regions define the inflatable cushion, the arm regions define two inflatable arms extending from part way down opposite edges of the inflatable cushion, and the toe regions define a respective pair of the inflatable cells which project upwardly at the end of the inflatable arms remote from the inflatable cushion, the inflatable cells being secured to one another along a fold line.

Preferably, the ends of the Inflatable arms opposite the Inflatable cushion are also secured to one another.

Optionally, the lower edge of the inflatable cushion incorporates a cut out section.

Preferably, each layer of fabric is generally W-shaped, with the two arm regions extending downwardly and outwardly from the central region, and the toe regions extending upwardly and outwardly from the arm regions, perpendicular to the arm regions, the arm regions thereby defining a first cut-out section below the central region having the general shape of an inverted-V and, together with the toe regions, defining two further shallower cut-out sections having a generally asymmetric V-shape, either side of the central region.

Conveniently, the inflatable cushion incorporates an aperture provided to receive a gas generator.

Preferably, the inflatable cells are configured to form a channel extending along the fold line.

Another aspect of the invention resides in the use of an air-bag according to any preceding claim in a "pre-crash" driver air-bag system, whereby the air-bag is rapidly deployed upon detection of an imminent crash impact to engage with a vehicle occupant prior to actual crash impact.

Preferably, the airbag is deployed within less than 0.1 ms of said detection.

Embodiments of the invention will now be described, by way of example, with reference to the accompanying drawings, in which:
FIGURE 1 is a schematic view showing a fabric layer for use in forming an airbag according to an embodiment of the present invention;
FIGURE 2a is a perspective view showing an airbag according to an embodiment of the present invention, in an inflated state;
FIGURE 2b is a plan view corresponding to Figure 2a;
FIGURE 2c is a side view corresponding to Figure 2a;
FIGURE 2d is a front view corresponding to Figures 2a -2c; and
FIGURES 3a -3c constitute a set of schematic perspective views, and corresponding plan views, showing various stages of deployment of the airbag in Figures 2a and 2b in use as a driver air bag during a vehicle crash situation.

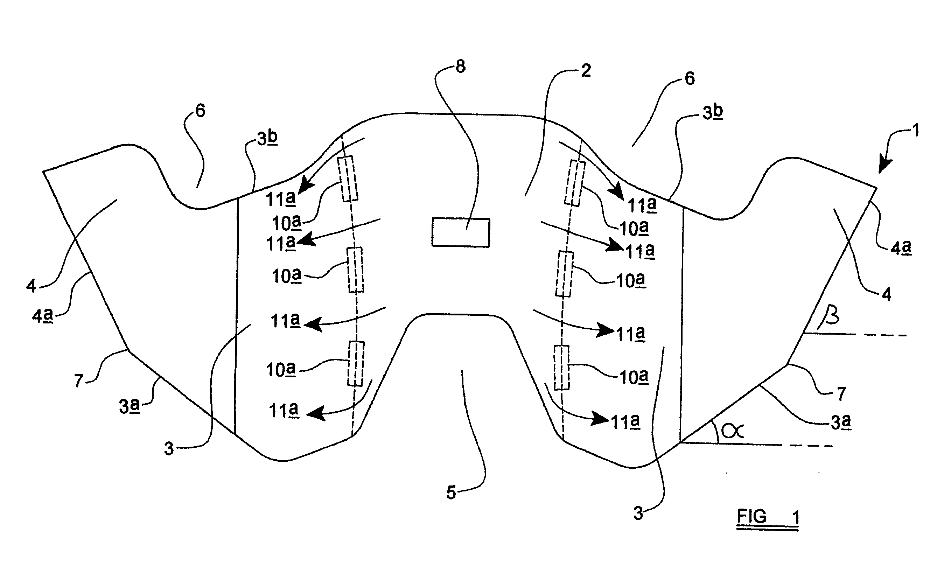

Referring to Figure 1, an airbag is formed from two identical superimposed layers of fabric 1 (of which only one is shown in Figure 1).

Each layer of fabric 1 is, very generally speaking, "W-shaped". Thus, the fabric layer 1 comprises a central region 2, two arm regions 3 extending downwardly and outwardly from the central region 2 on opposite sides of the central region 2, and a respective pair of toe regions 4 located at the opposite ends of the arm regions 3 and extending upwardly and outwardly from the respective arm regions 3, perpendicular to the top edge 3b of the arm regions 3.

The arm regions 3 thus define a central "cut-out" section 5, below the central region 2, having a generally symmetric inverted "V-shape" (effectively constituting the central inverted V of the "W-shape") and, in conjunction with the toe regions 4, further define a pair of generally asymmetric, shallower V-shaped "cut-out" sections 6, either side of the central region 2 (effectively constituting the outer Vs of the "W-shape"), whereby the toe regions 4 are spaced from the central region 2.

Still referring to Figure 1, the outer edges 4a of the toe regions 4 (being the edges furthest from the central region 2) extend downwardly and inwardly from the top edge 4b of the toe regions 4, at an angle β to the horizontal, to a level just below the apex of the cut-out section 5, where they meet the outer edges 3a of the respective arm regions 3 (again being the edges furthest from the central region 2). The outer edges 3a likewise extend downwardly and inwardly from the lower end of the edges 4a to form respective bottom apexes 3b with the edges of the cut-out section 6, but at an angle α to the horizontal which is less than the angle β (see Figure 1). The outer edges 3a, 4a thus form an intermediate apex 7 which points away from the central region 2.

The fabric layer 1 specifically shown in Figure 1 further incorporates an aperture 8 cut into the central region 2, the aperture 8 being dimensioned for connection to an inflator (not shown), in particular a conventional gas generator, to inject gas or other fluid into the airbag in conventional manner.

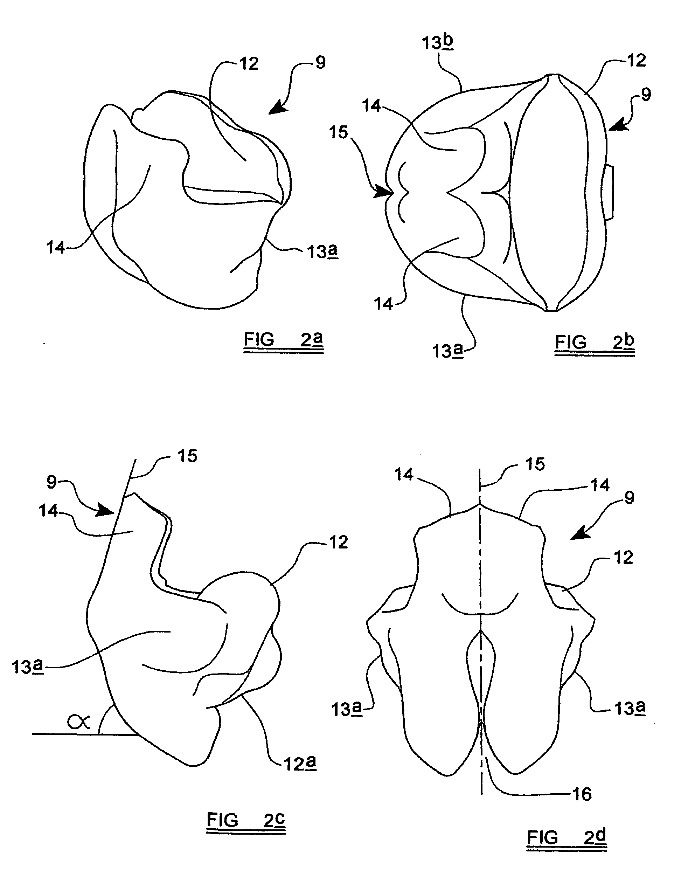

To construct the airbag, the two fabric layers 1 are attached to one another in conventional manner around their periphery to form a closed bag; the bag is then very loosely folded along the axis A in Figure 1 such that both outer edges 3a and 4a are aligned, and the outer edges 3a and 4a are then fixedly secured to one another, for example by sewing the edges together, to form an airbag 9 (see Figures 2a - 2d). Preferably, the central regions 2 are separated from the arm regions 3 by further sewing the fabric layers 1 together along two series of aligned seams (indicated in phantom at 10a,10b), each series of aligned seams 10a,10b comprising a plurality of seams aligned in a common line but separated from each other to define a corresponding series of fluid flow paths (indicated by the arrows 11 a, 11 b in Figure 1).

Thus, referring to Figures 2a - 2d, which show the airbag 9 in an inflated configuration, it is to be noted that the opposing central regions 2 of the respective fabric layers 1 together form an inflatable cushion 12 incorporating a cut-out section 12a (defined by cut-out sections 5 in each fabric layer 1), whilst the opposing respective arm portions 3 of the fabric layers 1 together form a secondary inflatable region in the form of a pair of inflatable arms 13a, 13b.

As best shown in Figure 2a and 2c, the inflatable arms 13a,13b extend from part way down opposite edges of the inflatable cushion 12, that is a portion 12a of the inflatable cushion projects upwardly above the arms13a,13b.

Still referring to Figures 2a - 2d, the toe regions 4 of the fabric layers 1 together form a pair of inflatable cells 14, in fluid communication with the inflatable arms 13a,13b, the inflatable cells 14 each projecting upwardly from the ends 13c,13d of the respective inflatable arms 13a,13b remote from the cushion 12, that is, each projecting upwardly above the inflatable arms 13a,13b in the same sense as the portion 12a of the inflatable cushion. As is best appreciated by referring to Figure 2c, the inflatable cells 14 are spaced from the inflatable cushion 12.

It is to be appreciated that the inflatable cells 14 are joined to one another by means of the sewing together of the opposite outer edges 4a. The attached outer edges 4a thus define a fold line 15 between the inflatable cells 14, about which the inflatable cells 14 may fold relative to one another, as described in more detail below.

Referring in particular to Figure 2c, it is noted the front face of the airbag 9 (facing away from the inflatable cushion 12), when viewed from the side (as in Figure 2b), extends upwardly and away from the bottom edge of the inflatable cushion 12 towards the apex 7 at an angle α (corresponding to the angle of inclination of the outer edges 3a of the fabric layer) and then extends upwardly above the apex 7 at an angle β (corresponding to the angle of inclination of the outer edges 4a of the fabric layers 1).

Moreover, it will be appreciated that, as the inflatable arms are sewn together only along the outer edge 3a, a gap 16 is formed, upon inflation of the airbag 9, in the front face of the airbag 9 opposite the cut-out section 12a in the inflatable cushion 12 (see in particular Figure 2d).

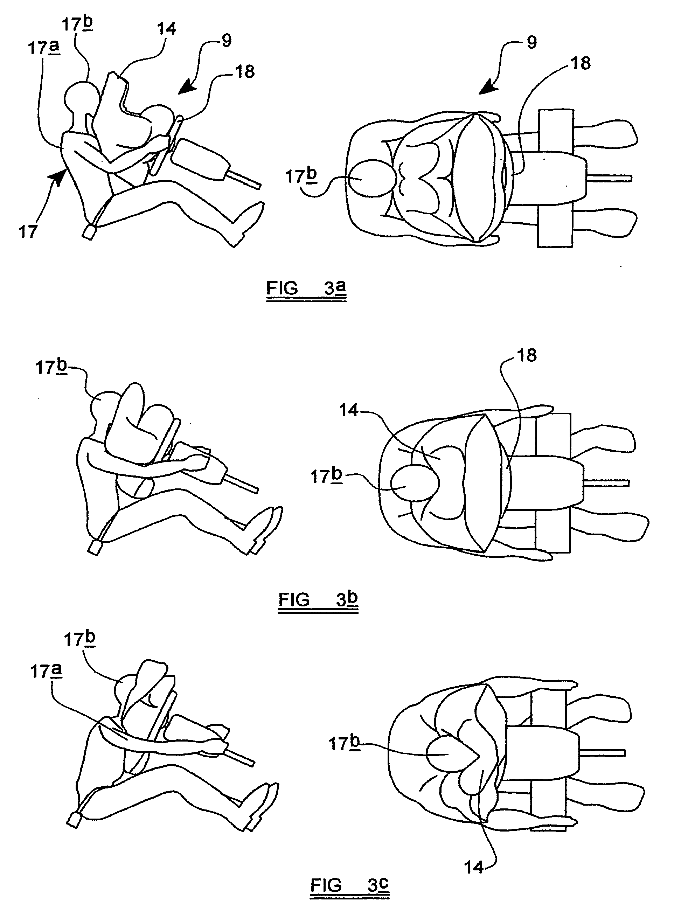

Referring now to Figures 3a to 3c, the airbag 9 will be described in the context of deployment as part of a DAB system, wherein the airbag 9 forms part of an airbag unit or module positioned at the hub of a steering wheel 18.

Thus, referring initially to Figure 3a, upon deployment the airbag 9 is inflated and very quickly assumes a substantially fully inflated configuration (corresponding to the configuration shown in Figures 2a - 2d).

In the inflated configuration shown in Figure 3a, the inflated arms 13a,13b, constituting the secondary inflatable region (being the region which begins to inflate immediately after the inflatable cushion 12 begins to inflate), extend forwardly (that is, towards the vehicle occupant 17) from the inflatable cushion 12 to engage the thorax region 17a of the vehicle occupant 17. In addition, the inflated cells 14 extend upwardly from the inflated arms 13a,13b and are spaced forwardly of the inflatable cushion 12 to initially engage with the head 17b of the vehicle occupant 17. It is to be noted that, in the position shown in Figure 3a where the thorax 17a and head 17b of the vehicle occupant are initially engaged respectively with the arms 13a,13b and inflated cells 14, the head 17a of the vehicle occupant is spaced forwardly of the inflatable cushion 12, having struck initially against the inflatable cells 14.

As the vehicle occupant continues to move in a direction A relative to the (rapidly decelerating) steering wheel 18, the thorax 17a of the vehicle occupant 17 is progressively decelerated, in a controlled manner, through deformation and compression of the arms 13a, 13b, which extend between the inflated cushion 12 and the thorax region 17a of the vehicle occupant 17 (see Figures 3b and 3c). At the same time, cut-out section 12a and gap 16 may each help to reduce loading on the abdomen of the vehicle occupant 17.

In the case of the head 17b however, striking impact occurs above the level of the arms 13a,13b, so that deformation and compression of the arms 13a,13b does not directly decelerate the head 17b along the direction A. Rather, deceleration of the head 17b is controlled principally by the inflatable cells 14 and inflatable cushion 12 as follows.

Thus, as the head 17b strikes the inflatable cells 14, the inflatable cells 14 do not undergo substantial initial deformation, but rather are substantially free to move towards the inflatable cushion 12, thereby progressively closing the space between the inflatable cells 14 and inflatable cushion 12 before eventually engaging the inflatable cushion, whereafter controlled deceleration of the head 17b continues through deformation and compression of both the inflatable cells 14 and the inflatable cushion 12 (see Figures 3b and 3c). It will be appreciated that, in this manner, the space between the inflatable cells 14 and inflatable cushion 12 therefore effectively reduces the "stiffness" of the airbag in relation to the striking impact of the head 17b as compared to the striking impact of the thorax 17a, thereby reducing the reaction force exerted by the airbag 9 on the head 17b, as compared to the thorax 17a.

Moreover, as the head 17b strikes against the inflatable cells 14, the inflatable cells 14 are free to progressively fold inwardly toward one another, along the fold line 15, as they move (with the head 17b) towards the inflatable cushion 12. It will be appreciated that this progressive folding of the inflatable cells along the fold line 15 tends to further reduce deformation of the inflatable cells 14, prior to the inflatable cells 14 engaging the inflatable cushion 12, thereby also tending to reduce the reaction force exerted by the airbag 9 on the head 17b, as compared to the thorax 17a.

In this manner, the airbag 9 exerts a lower reaction force on the head 17b than the thorax 17a, whereby (taking account of the difference in mass between the head 17b and thorax 17a) the airbag provides for a more uniform deceleration of thorax 17a and head 17b.

Indeed, it will be appreciated that by simply selecting an appropriate initial spacing between the inflatable cells 14 and inflatable cushion 12, in conjunction with the fold line 15, one can directly control the reduction in force applied to the head, thereby better matching the deceleration of the head and thorax and reducing relative acceleration of the head and thorax, during a crash impact, which might otherwise put undesirable strain on the neck region of the vehicle occupant.

As shown in Figures 2a-2d, the fabric layers 1 may be shaped such that, when the airbag is constructed, they define a channel 19 running along the fold line 15. Such a channel promotes better coupling between the vehicle occupant and the front face of the airbag 9, in particular by providing a recess for receiving and locating the central features of the vehicle occupants face.

Whilst in the current embodiment the airbag is constructed from layers of fabric being generally "W-shaped", various other shapes of fabric layers will be apparent which will allow construction of an airbag comprising an inflatable cushion, a secondary inflatable region extending outwardly from the inflatable cushion and a pair of inflatable cells extending upwardly from the secondary inflatable region remote from the inflatable cushion.

It is to be noted that the cut-out section 12a and gap 16 are not considered to be essential features of the present invention. Indeed, in one embodiment (not shown) it is envisaged that the cut-out section 12a might be dispensed with entirely, whilst the entire bottom edges of the fabric layers might be secured together, in addition to the edges 3a and 4a.

Similarly, in a further embodiment (not shown), the sets of aligned seams 10a, 10b may be dispensed with entirely, so that there is no structured separation between the inflatable cushion 12 and the inflatable arms 13a, 13b.

Whilst securing of various parts of the airbag 9 is by sewing seams, it is envisaged that any suitable form of securing may alternatively be used, for example gluing, including in relation to the fold line between the inflatable cells. In the case of seams specifically, these may be stitched seams or, alternatively, the fabric layers may be produced simultaneously with the seams being produced by a one-piece-weaving technique.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An airbag [9], the airbag [9] comprising an inflatable cushion [12] for connection to an inflator, a secondary inflatable region in fluid communication with the inflatable cushion [12] and a pair of separate inflatable cells [14] in fluid communication with the secondary inflatable region, the airbag [9] being configured such that, when the airbag [9] is inflated during deployment, the secondary inflatable region extends forwardly from the inflatable cushion [12] for initially engaging the thorax [17a] of a vehicle passenger [17] whilst the head of the passenger [17b] is spaced forwardly of the inflatable cushion, the inflatable cells [14] extending upwardly from the secondary region upon inflation and being spaced forwardly of the inflatable cushion [12] for initial engagement with the head [17b] of the passenger during said deployment, the inflatable cells [14] further being joined to one another along a fold line [15] whereby, upon striking of the inflatable cells [14] by the head [17b] of the passenger [17], the inflatable cells [14] tend to fold towards one another, along the fold line [15], whilst moving towards the inflatable cushion [12].

2. An airbag [9] according to claim 1, wherein the secondary inflatable region is defined by a pair of separate inflatable arms [13a, 13b] which, when the airbag [9] is inflated, extend forwardly from the Inflatable cushion [12], the ends of the arms [13a, 13b] remote from the inflatable cushion [12] being secured to one another and each supporting a respective one of the inflatable cells [14].

3. An airbag [9] according to claim 1 or 2, wherein the airbag [9] is formed, from two superimposed layers of fabric material [1].

4. An air-bag (9) according to any preceding claim, wherein the lower edge of the inflatable cushion incorporates a cut-out section [12a].

5. An air-bag [9] according to claim 1, formed from two superimposed layers of fabric [1] of substantially identical shape, each layer of fabric [1] comprising a central region [2], two arm regions [3] extending outwardly on opposite sides of the central region [2] and a respective pair of upwardly directed toe regions [4] at the opposite ends of the arm regions [3], the two layers [1] being secured to one another around their periphery, wherein the opposing central regions [2] define the inflatable cushion [12], the arm regions [3] define two inflatable arms [13a, 13b] extending from part way down opposite edges of the inflatable cushion [12], and the toe regions [4] define a respective pair of the inflatable cells [14] which project upwardly at the end of the inflatable arms [13a, 13b] remote from the inflatable cushion [12], the inflatable cells [14] being secured to one another along a fold line [15].

6. An air-bag according to claim 5, wherein the ends of the inflatable arms [13a, 13b] opposite the inflatable cushion [12] are also secured to one another.

7. An air-bag according to claim 5 or 6, wherein the lower edge of the inflatable cushion [12] incorporates a cut-out section [12a].

8. An air-bag according to claim 7, wherein each layer of fabric [1] is generally W-shaped, with the two arm regions [3] extending downwardly and outwardly from the central regions [2], and the toe regions [4] extending upwardly and outwardly from the arm regions [3], perpendicular to the arm regions [3], the arm regions [3] thereby defining a first cut-out section [5] below the central region [2] having the general shape of an inverted-V and, together with the toe regions [4], defining two further shallower cut-out sections [6] having a generally asymmetric V-shape, either side of the central region [2].

9. An air-bag according to any preceding claim, wherein the inflatable cushion [12] incorporates an aperture [8] provided to receive a gas generator.

10. An air-bag according to any preceding claim, wherein the inflatable cells [14] are configured to form a channel [19] extending along the fold line [15].

11. Use of an air-bag [9] according to any preceding claim in a "pre-crash" driver air-bag system, whereby the air-bag [9] is rapidly deployed upon detection of an imminent crash impact to engage with a vehicle occupant prior to actual crash impact.

12. Use of an air-bag [9] according to claim 11, wherein the air-bag is deployed within less than 0.1 ms of said detection.

## Patentansprüche

1. Airbag (9), wobei der Airbag (9) ein aufblasbares Kissen (12) zur Verbindung mit einer Aufblasvorrichtung, einen sekundären aufblasbaren Bereich in Fluidverbindung mit dem aufblasbaren Kissen (12) und ein Paar getrennte aufblasbare Zellen (14) in Fluidverbindung mit dem sekundären aufblasbaren Bereich umfasst, wobei der Airbag (9) so konfiguriert ist, dass, wenn der Airbag (9) während einer Entfaltung aufgeblasen wird, der sekundäre aufblasbare Bereich sich von dem aufblasbaren Kissen (12) nach vorne erstreckt, um zuerst mit dem Brustkorb (17a) eines Fahrzeuginsassen (17) in Kontakt zu kommen, während der Kopf des Insassen (17b) nach vorne von dem aufblasbaren Kissen beabstandet ist, wobei sich die aufblasbaren Zellen (14) von dem sekundären Bereich beim Aufblasen nach oben erstrecken und für einen Anfangskontakt mit dem Kopf (17b) des Insassen während der Entfaltung von dem aufblasbaren Kissen (12) nach vorne beabstandet sind, wobei die aufblasbaren Zellen (14) weiterhin entlang einer Faltlinie (15) miteinander verbunden sind, wodurch, wenn die aufblasbaren Zellen (14) von dem Kopf (17b) des Insassen (17) getroffen werden, die aufblasbaren Zellen (14) dazu neigen, sich zueinander entlang der Faltlinie (15) zu falten, während sie sich in Richtung des aufblasbaren Kissens (12) bewegen.

2. Airbag (9) nach Anspruch 1, wobei der sekundäre aufblasbare Bereich durch ein Paar getrennte aufblasbare Arme (13a, 13b) definiert ist, die, wenn der Airbag (9) aufgeblasen ist, sich nach von dem aufblasbaren Kissen (12) nach vorne erstrecken, wobei die Enden der von dem aufblasbaren Kissen (12) entfernten Arme (13a, 13b) aneinander befestigt sind und jeweils eine betreffende der aufblasbaren Zellen (14) tragen.

3. Airbag (9) nach Anspruch 1 oder 2, wobei der Airbag (9) aus zwei übereinander gelegten Schichten Textilmaterial (1) ausgebildet ist.

4. Airbag (9) nach irgendeinem vorhergehenden Anspruch, wobei die untere Kante des aufblasbaren Kissens ein ausgeschnittenes Stück (12a) beinhaltet.

5. Airbag (9) nach Anspruch 1, der aus zwei übereinander gelegten Textilschichten (1) von im Wesentlichen identischer Form ausgebildet ist, wobei jede Textilschicht (1) einen mittleren Bereich (2), zwei Armbereiche (3), die sich auf entgegengesetzten Seiten des mittleren Bereichs (2) nach außen erstrecken, und ein jeweiliges Paar nach oben gerichteter Zehenbereiche (4) an den entgegengesetzten Enden der Armbereiche (3) umfasst, die beiden Schichten (1) um ihren Umfang herum aneinander befestigt sind, wobei die entgegengesetzten mittleren Bereiche (2) das aufblasbare Kissen (12) begrenzen, die Armbereiche (3) zwei aufblasbare Arme (13a, 13b) begrenzen, die sich von teilweise unteren entgegengesetzten Kanten des aufblasbaren Kissens (12) erstrecken, und die Zehenbereiche (4) ein jeweiliges Paar der aufblasbaren Zellen (14) begrenzen, die sich am Ende der von dem aufblasbaren Kissen (12) entfernten aufblasbaren Arme (13a, 13b) nach oben erstrecken, wobei die aufblasbaren Zellen (14) entlang einer Faltlinie (15) aneinander befestigt sind.

6. Airbag nach Anspruch 5, wobei die Enden der aufblasbaren Arme (13a, 13b) gegenüber dem aufblasbaren Kissen (12) ebenfalls aneinander befestigt sind.

7. Airbag nach Anspruch 5 oder 6, wobei die untere Kante des aufblasbaren Kissens (12) ein ausgeschnittenes Stück (12a) beinhaltet.

8. Airbag nach Anspruch 7, wobei jede Textilschicht (1) im Allgemeinen W-förmig ist, sich die beiden Armbereiche (3) von den mittleren Bereichen (2) nach unten und außen erstrecken und sich die Zehenbereiche (4) von den Armbereichen (3) nach oben und außen senkrecht zu den Armbereichen (3) erstrecken, die Armbereiche (3) **dadurch** ein erstes ausgeschnittenes Stück (5) unterhalb des mittleren Bereichs (2) begrenzen, der die allgemeine Form eines umgedrehten V hat, und zusammen mit den Zehenbereichen (4) zwei weitere, flachere ausgeschnittene Stücke (6), die eine im Allgemeine asymmetrische V-Form haben, zu beiden Seiten des mittleren Bereichs (2) begrenzen.

9. Airbag nach irgendeinem vorhergehenden Anspruch, wobei das aufblasbare Kissen (12) eine Öffnung (8) beinhaltet, die dazu vorgesehen ist, einen Gasgenerator aufzunehmen.

10. Airbag nach irgendeinem vorhergehenden Anspruch, wobei die aufblasbaren Zellen (14) dazu konfiguriert sind, einen Kanal (19) zu bilden, der sich entlang der Faltlinie (15) erstreckt.

11. Verwendung eines Airbags (9) nach irgendeinem vorhergehenden Anspruch in einem "Pre-Crash"-Fahrerairbagsystem, wodurch der Airbag (9) bei Erfassung eines drohenden Kollisionsaufschlags rasch entfaltet wird, um mit einem Fahrzeuginsassen vor dem tatsächlichen Kollisionsaufschlag in Kontakt zu kommen.

12. Verwendung eines Airbags (9) nach Anspruch 11, wobei der Airbag innerhalb von weniger als 0,1 ms der Erfassung entfaltet wird.

## Revendications

1. Un coussin de sécurité gonflable [9], le coussin de sécurité gonflable [9] se composant d'un coussin gonflable [12] pour connexion à un dispositif de gonflage, une région gonflable secondaire en communication fluide avec le coussin gonflable [12] et une paire de cellules gonflables séparées [14] en communication fluide avec la région gonflable secondaire, le coussin de sécurité gonflable [9] étant configuré de manière telle que, lorsque ce même coussin de sécurité gonflable [9] est gonflé durant son déploiement, la région gonflable secondaire s'étende vers l'avant à partir du coussin gonflable [12] pour venir initialement en contact avec le thorax [17a] d'un passager du véhicule [17] tandis que la tête du passager [17b] est située à une certaine distance à l'avant du coussin gonflable, les cellules gonflables [14] s'étendant vers le haut à partir de la région secondaire lors du gonflement et étant situées à une certaine distance à l'avant du coussin gonflable [12] pour l'entrée en contact initiale avec la tête [17b] du passager durant ledit déploiement, les cellules gonflables [14] étant en outre jointes les unes aux autres le long d'une ligne de pliage [15], ce qui fait que, lorsque les cellules gonflables [14] sont heurtées par la tête [17b] du passager [17], ces mêmes cellules gonflables [14] tendent à se plier les unes vers les autres, le long de la ligne de pliage [15], tout en se déplaçant vers le coussin gonflable [12].

2. Un coussin de sécurité gonflable [9] selon la revendication 1, dans lequel la région gonflable secondaire est définie par une paire de bras gonflables séparés [13a, 13b] qui, lorsque le coussin de sécurité gonflable [9] est gonflé, s'étendent vers l'avant à partir du coussin gonflable [12], les extrémités des bras [13a, 13b] éloignées du coussin gonflable [12] étant fixées les unes aux autres et soutenant chacune une des cellules gonflables [14].

3. Un coussin de sécurité gonflable [9] selon la revendication 1 ou 2, dans lequel le coussin de sécurité gonflable [9] est formé à partir de deux couches superposées de tissu [1].

4. Un coussin de sécurité gonflable (9) selon n'importe laquelle des revendications précédentes, dans lequel le bord inférieur du coussin gonflable comporte une section découpée [12a].

5. Un coussin de sécurité gonflable [9] selon la revendication 1, formé à partir de deux épaisseurs superposées de tissu [1] possédant une forme pour l'essentiel identique, chaque épaisseur de tissu [1] comprenant une région centrale [2], deux régions de bras [3] s'étendant vers l'extérieur sur les côtés opposés de la région centrale [2] et une paire respective de régions de doigts dirigés vers le haut [4] aux extrémités opposées des régions des bras [3], les deux épaisseurs [1] étant fixées l'une à l'autre sur leur pourtour, dans lequel les régions centrales opposées [2] définissent le coussin gonflable [12], les régions des bras [3] définissent deux bras gonflables [13a, 13b] s'étendant à partir des bords opposés du coussin gonflable [12] à mi-hauteur, et les régions des doigts [4] définissent une paire respective de cellules gonflables [14] faisant saillie vers le haut à l'extrémité des bras gonflables [13a, 13b] éloignée du coussin gonflable [12], les cellules gonflables [14] étant fixées l'une à l'autre sur une ligne de pliage [15].

6. Un coussin de sécurité gonflable selon la revendication 5, dans lequel les extrémités des bras gonflables [13a, 13b] opposées au coussin gonflable [12] sont également fixées l'une à l'autre.

7. Un coussin de sécurité gonflable selon la revendication 5 ou 6, dans lequel le bord inférieur du coussin gonflable [12] possède une section découpée [12a].

8. Un coussin de sécurité gonflable selon la revendication 7, dans lequel chaque épaisseur de tissu [1] possède généralement une forme en W, les deux régions des bras [3] s'étendant à partir des régions centrales [2] vers le bas et vers l'extérieur, et les régions des doigts [4] s'étendant à partir des régions des bras [3] vers le haut et vers l'extérieur, perpendiculairement aux régions des bras [3], les régions des bras [3] définissant ainsi une première section découpée [5] au-dessous de la région centrale [2] ayant la forme générale d'un V inversé et, avec les régions des doigts [4], définissant deux autres régions découpées moins profondes [6] ayant une forme en V généralement asymétrique, de chaque côté de la région centrale [2].

9. Un coussin de sécurité gonflable selon n'importe laquelle des revendications précédentes, dans lequel le coussin gonflable [12] comporte une ouverture [8] pour la réception d'un générateur de gaz.

10. Un coussin de sécurité gonflable selon n'importe laquelle des revendications précédentes, dans lequel les cellules gonflables [14] sont configurées pour former un canal [19] le long de la ligne de pliage [15].

11. L'utilisation d'un coussin de sécurité gonflable [9] selon n'importe laquelle des revendications précédentes dans un système de coussin gonflable pour conducteur « pré-accident », dans lequel le coussin de sécurité gonflable [9] se déploie rapidement en cas de détection d'un impact imminent pour entrer en contact avec un occupant du véhicule avant l'impact.

12. L'utilisation d'un coussin de sécurité gonflable [9] selon la revendication 11, dans laquelle le coussin de sécurité gonflable se déploie moins de 0,1 ms après ladite détection.
